# EUROPÄISCHE PATENTSCHRIFT

(11) **EP 2 531 712 B1**
(45) Veröffentlichungstag und Bekanntmachung des Hinweises auf die Patenterteilung: **25.06.2014**
(21) Anmeldenummer: 10795253.3
(22) Anmeldetag: 18.12.2010
(51) Int. Cl.: F02D 41/00, F02D 13/02, F02M 25/07

(54) **VERFAHREN ZUM BETREIBEN EINER BRENNKRAFTMASCHINE**
METHOD FOR OPERATING AN INTERNAL COMBUSTION ENGINE
PROCÉDÉ PERMETTANT DE FAIRE FONCTIONNER UN MOTEUR À COMBUSTION INTERNE

(30) Priorität: 06.02.2010 DE 102010007071
(43) Veröffentlichungstag der Anmeldung: 12.12.2012
(73) Patentinhaber: Volkswagen Aktiengesellschaft, 38436 Wolfsburg (DE)
(72) Erfinder: GROENENDIJK, Axel, 38518 Gifhorn (DE)
(86) Internationale Anmeldenummer: PCT/EP2010/007777
(87) Internationale Veröffentlichungsnummer: WO 2011/095197

(56) Entgegenhaltungen:
- DE-A1- 10 324 988
- US-A- 4 194 472
- US-A1- 2002 129 798
- US-A1- 2007 235 011

## Beschreibung

Die Erfindung betrifft ein Verfahren zum Betreiben einer Brennkraftmaschine mit mindestens einem Arbeitszylinder, in dem ein Kolben auf und ab bewegt wird, so dass innerhalb eines Arbeitsspiels von 720 Grad Kurbelwelle nacheinander ein Ansaugtakt, ein Verdichtungstakt, ein Arbeitstakt und ein Ausstoßtakt ausgeführt wird, und dem mindestens drei Gaswechselventile zugeordnet sind, mit einer Abgasleitung, mit mindestens einem Einlasskanal, der in ein Gaswechselventil in Form eines Einlassventils mündet und über dieses Einlassventil dem Arbeitszylinder mindestens Verbrennungsluft zuführt, mit mindestens einem Auslasskanal, der in ein Gaswechselventil in Form eines Auslassventils mündet und über dieses Auslassventil von dem Arbeitszylinder mindestens Abgas in die Abgasleitung abführt, sowie mit mindestens einer Abgasrückführleitung, die mit der Abgasleitung der Brennkraftmaschine verbunden ist, wobei mindestens eines der Gaswechselventile von mindestens einem der Arbeitszylinder als AGR-Ventil verwendet und diesem Abgas aus einer Abgasrückführleitung zugeführt wird, gemäß dem Oberbegriff des Patentanspruchs 1.

Die Abgasrückführung ist eine der wesentlichen Elemente der innermotorischen NOₓ-Reduzierung bei einem Dieselmotor. Man unterscheidet die "externe" Abgasrückführung (AGR), wie beispielsweise aus der DE 199 61 292 C2 bekannt, mit gekühlten und ungekühlten Varianten von der "internen" AGR, wie beispielsweise aus der DE 10 2005 053 940 A1 bekannt. Bei der internen Abgasrückführung wird das Verbleiben oder Zurückführen von Restgas üblicherweise durch Beeinflussung der Gaswechselventilsteuerzeiten mittels eines zusätzlichen Öffnens von Ein- oder Auslassventilen oder einer negativen Ventilüberschneidung über einen variablen Ventiltrieb realisiert. Der Vorteil der internen AGR gegenüber der externen AGR sind dabei die kurzen Wege und die schnellen Reaktionszeiten sowie die direkte Dosierbarkeit. Nachteilig ist allerdings das Fehlen der Möglichkeit einer wirksamen Abkühlung des Restgases, wie bei der externen AGR.

Beim bekannten Miller/Atkinson-Zyklus wird der Zeitpunkt "Einlassventil schließt" (ES) nach spät verschoben. Auf diese Weise wird bereits im Zylinder befindliches Frischgas bzw. Verbrennungsluft, was hierin auch als Zylinderladung bezeichnet wird, teilweise wieder in einen Einlasskanal für Verbrennungsluft ausgeschoben. Dies bedeutet einen Füllungsnachteil, der aber über eine Aufladung mit einem geeigneten Ladedruck kompensiert wird. Dabei ist der Ladedruck im Volumen zwischen Laderausgang und Motoreinlass so zu regeln, dass der Ladedruck in jedem Miller-Betriebspunkt, d.h. jeder Betriebspunkt in dem der Miller/Atkinson-Zyklus zur Anwendung kommt, dem theoretischen Verdichtungsenddruck in den Arbeitszylindern der Brennkraftmaschine zum Zeitpunkt Einlassventil schließt entspricht.

Der positive Effekt des Miller/Atkinson-Zyklus mittels frühem oder spätem Zeitpunkt für das Schließen des Einlassventils auf die NOₓ-Emission und Homogenisierbarkeit des Dieselgemischs ist bekannt. Weiterhin kann bei ottomotorischen Anwendungen die Klopfneigung bei Hochaufladung deutlich reduziert werden. Im Gegensatz zum Ottomotor, der aufgrund fehlender geometrischer Zwänge mit positiver Ventilüberschneidung arbeiten kann, ist beim Dieselmotor eine einfache Umsetzung des Verfahrens mit Hilfe eines Phasenstellers generell nicht möglich. Grund hierfür ist eine mechanische Kollision des Ventils mit dem Kolben bei Frühverstellung und vermehrte Pumparbeit bei Spätverstellung.

Außerdem steht in der Regel für die "Millerphase" vor Verdichtungsbeginn lediglich ein Einlassventil zur Verfügung, welches bis zu Kurbelwinkeln weit nach Ladungswechsel-UT (Unterer Totpunkt des Hubkolbens nach dem Ladungswechsel, d.h. zwischen einem Ausstoßtakt und einem Ansaugtakt) zum Realisieren der "Millerphase" vor Verdichtungsbeginn geöffnet bleiben kann. Somit steht für das Ausströmen von Frischgas aus dem Arbeitszylinder während der "Millerphase" vor Verdichtungsbeginn dementsprechend auch nur das Volumen eines Einlasskanals zur Verfügung, auch wenn für den jeweiligen Arbeitszylinder zwei oder mehr Einlasskanale vorgesehen sind.

Die US 2007/0235011 A1 zeigt ein Verfahren zum Betreiben einer Brennkraftmaschine mit einer Abgasrückführung, das geeignet ist, um eine NOX-Reduzierung zu erreichen. Dazu weist ein Arbeitszylinder ein als AGR-Ventil ausgebildetes Gaswechselventil auf, welchem Abgas aus einer Abgasrückführleitung zugeführt wird.

Die DE 103 24 988 A1 offenbart eine Brennkraftmaschine mit einer Abgasrückführung, an deren Zylinder über eine Leitung ein Abgassammelbehälter angeordnet ist. Die Leitung kann über ein Ventil geöffnet bzw. geschlossen werden.

Der Erfindung liegt die Aufgabe zugrunde, ein Verfahren der o.g. Art hinsichtlich der Dosierung von Abgasrückführung und der Realisation eines Miller-Atkinson-Zyklus zu verbessern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass in einem vorbestimmten Betriebszustand der Brennkraftmaschine innerhalb eines Arbeitsspiels von 720 Grad Kurbelwelle das AGR-Ventil mindestens zweimal geöffnet wird, wobei eine Öffnungsdauer der ersten Öffnung des AGR-Ventils zeitlich mit einer Öffnung des Auslassventil während des Ausstoßtaktes mindestens überlappt und eine Öffnungsdauer der zweiten Öffnung des AGR-Ventils zeitlich mit einer Öffnungsdauer des Einlassventils während des Ansaugtaktes mindestens überlappt, wobei das AGR-Ventil zwischen der ersten und der zweiten Öffnung geschlossen wird.

Dies hat den Vorteil, dass ohne zusätzliche Ventile oder Aktuatoren innerhalb eines Arbeitsspiels der Brennkraftmaschine gleichzeitig eine interne und externe Abgasrückführung mit hoher Zumessgenauigkeit für das rückgeführte Abgas realisiert ist.

Eine gleichzeitige Darstellung von Abgasrückführung und Miller-Atkinson-Zyklus mittels AGR-Ventil ohne zusätzliche Ventile oder Aktuatoren wobei ein zusätzliches Volumen zum Zwischenspeichern von ausgeschobener Zylinderladung in Form der Abgasrückführleitung zur Verfügung steht, wird dadurch zur Verfügung gestellt, dass in einem vorbestimmten Betriebszustand der Brennkraftmaschine innerhalb eines Arbeitsspiels von 720 Grad Kurbelwelle das AGR-Ventil zeitlich nach einem unteren Totpunkt zwischen einem Ansaugtakt und einem Verdichtungstakt derart spät nach Beginn des Verdichtungstaktes und zeitlich nach einem Schließen des Einlassventils geschlossen wird, dass ein Teil der Zylinderladung in die Abgasrückführleitung ausgeschoben wird, bevor ein Verdichtungstakt beginnt, so dass die Brennkraftmaschine mit einem Miller-Atkinson-Zyklus betrieben wird.

Eine interne Abgasrückführung ist dadurch realisiert, dass die Öffnungsdauer der ersten Öffnung des AGR-Ventils derart gewählt wird, dass ein Öffnungszeitpunkt des AGR-Ventils für die erste Öffnung zeitlich bei oder nach einem Öffnungszeitpunkt des Auslassventils für den Ausstoßtakt und ein Schließzeitpunkt des AGR-Ventils für die erste Öffnung zeitlich bei oder vor einem Schließzeitpunkt des Auslassventils für den Ausstoßtakt liegt. ,

Eine externe Abgasrückführung ist dadurch realisiert, dass die Öffnungsdauer der zweiten Öffnung des AGR-Ventils derart gewählt wird, dass ein Öffnungszeitpunkt des AGR-Ventils für die zweite Öffnung zeitlich bei oder nach einem Öffnungszeitpunkt des Einlassventils für den Ansaugtakt und ein Schließzeitpunkt des AGR-Ventils für die zweite Öffnung zeitlich bei oder vor einem Schließzeitpunkt des Einlassventils für den Ansaugtakt liegt.

Eine optimale Einstellung eines Betriebspunktes der Brennkraftmaschine mit minimierten Schadstoffemissionen erzielt man dadurch, dass dem Einlassventil ausschließlich Frischluft oder einer Grundmenge AGR zugeführt wird, dass dem AGR-Ventil reines oder mit Frischluft gemischtes Abgas aus einem gekühlten oder ungekühlten Niederdruck-AGR-Kreislauf zugeführt wird und/oder dass dem AGR-Ventil reines oder mit Frischluft gemischtes Abgas aus einem gekühlten oder ungekühlten Hochdruck-AGR-Kreislauf zugeführt wird.

Die Erfindung wird im Folgenden anhand der Zeichnung näher erläutert. Diese zeigt in
- Fig. 1: ein schematisches Blockschaltbild einer bevorzugten Ausführungsform einer Brennkraftmaschine zum Ausführen des erfindungsgemäßen Verfahrens,
- Fig. 2: eine graphische Darstellung der Kolbenbewegung sowie der Ventilbewegung von Einlass-, Auslassventilen und eines als AGR-Ventil verwendeten Gaswechselventils, wobei ein Miller-Atkinson-Zyklus mit wenig AGR realisiert ist,
- Fig. 3: eine graphische Darstellung der Kolbenbewegung sowie der Ventilbewegung von Einlass-, Auslassventilen und eines als AGR-Ventil verwendeten Gaswechselventils, wobei ein Miller-Atkinson-Zyklus mit viel AGR realisiert ist und
- Fig. 4.: eine graphische Darstellung der Kolbenbewegung sowie der Ventilbewegung von Einlass-, Auslassventilen und eines als AGR-Ventil verwendeten Gaswechselventils, wobei gleichzeitig eine innere und eine externe AGR mit zweifacher Öffnung des AGR-Ventils realisiert ist.

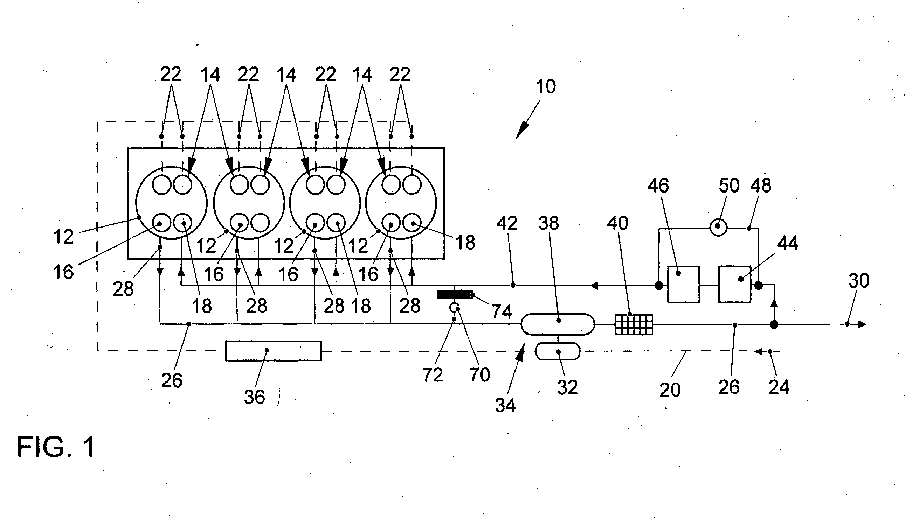

Die in Fig. 1 dargestellte, beispielhafte Ausführungsform einer Brennkraftmaschine 10 zum Ausführen des erfindungsgemäßen Verfahrens umfasst Arbeitszylinder 12, wobei jedem Arbeitszylinder 12 Einlassventile 14 und ein Auslassventil 16 zugeordnet sind. Ferner ist jedem Arbeitszylinder 12 ein weiteres Gaswechselventil 18 zugeordnet. Über eine Frischluftzuführung 20 wird den Arbeitszylindern 12 über die Einlassventile 14 und entsprechende, in die Einlassventile 14 mündende Einlasskanäle 22 Frischluft 24 als Verbrennungsluft zugeführt und über eine Abgasleitung 26 wird von den Arbeitszylindern 12 über die Auslassventile 16 und entsprechende, in die Auslassventile 16 mündende Auslasskanäle 28 Abgas 30 abgeleitet. In jedem Arbeitszylinder 12 ist ein Kolben (nicht dargestellt) auf und ab bewegbar angeordnet, so dass in jedem Arbeitszylinder innerhalb eines Arbeitsspiels von 720 Grad Kurbelwelle nacheinander ein Ansaugtakt, ein Verdichtungstakt, ein Arbeitstakt und ein Ausstoßtakt ausgeführt wird.

In der Frischluftzuführung 20 ist ein Verdichter 32 eines Abgasturboladers 34 und ein Ladeluftkühler 36 angeordnet. In der Abgasleitung 26 ist eine Turbine 38 des Abgasturboladers 34 und ein Partikelfilter 40, wie beispielsweise eine Dieselpartikelfilter, angeordnet. Weiterhin ist eine Abgasrückführleitung 42 zum Zurückführen von Abgas 30 in den Verbrennungsprozess in den Arbeitszylinder 12 vorgesehen. Diese Abgasrückführleitung 42 ist stromab der Turbine 38 mit der Abgasleitung 26 verbunden und weist einen AGR-Kühler 44 und einen Ladeluftkühler 46 für AGR auf, wobei letzterer ggf. auch in einer Baueinheit mit dem Ladeluftkühler 36 ausgebildet ist. Weiterhin ist in der Abgasrückführleitung 42 eine Bypassleitung 48 vorgesehen, welche den AGR-Kühler 44 und den Ladeluftkühler 46 für AGR überbrückt und ein Bypassventil 50 aufweist.

Das jeweils vierte Gaswechselventil 18 eines jeden Arbeitszylinders 12 ist weder mit einem Einlasskanal 22 noch mit einem Auslasskanal 28 sondern mit der Abgasrückführleitung 42 verbunden. Auf diese Weise dient eines der Gaswechselventile eines jeden Arbeitszylinders, welches von einer entsprechenden Nockenwelle betätigt wird, unmittelbar als AGR-Ventil.

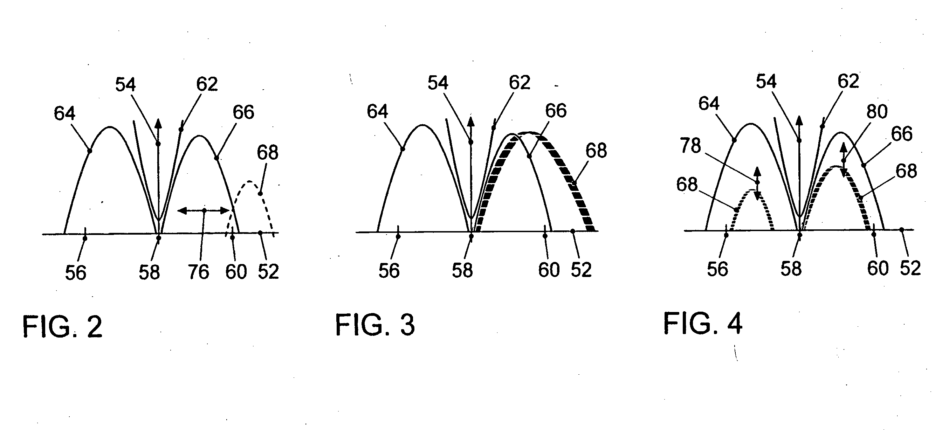

In den Fig. 2 bis 4 ist auf einer horizontalen Achse 52 ein Kurbelwinkel und auf einer vertikalen Achse 54 eine Hubbewegung aufgetragen. Auf der horizontalen Achse 52 ist bei 56 ein unterer Totpunkt (UT) des Hubkolbens vor dem Ladungswechsel (zwischen Arbeitstakt und Ausstoßtakt), bei 58 ein oberer Totpunkt (OT) des Hubkolbens während des Ladungswechsels (zwischen Ausstoßtakt und Ansaugtakt) und bei 60 ein unterer Totpunkt (UT) des Hubkolbens nach dem Ladungswechsel (zwischen Ansaugtakt und Verdichtungstakt) aufgetragen. Ein erster Graph 62 veranschaulicht die Hubbewegung 54 über den Kurbelwinkel 52 für den Kolben, ein zweiter Graph 64 veranschaulicht die Hubbewegung 54 über den Kurbelwinkel 52 für die Auslassventile 16, ein dritter Graph 66 veranschaulicht die Hubbewegung 54 über den Kurbelwinkel 52 für die Einlassventile 14 und ein vierter Graph 68 (gestrichelt) veranschaulicht die Hubbewegung 54 über den Kurbelwinkel 52 für diejenigen Gaswechselventile 18, die weder mit einem Einlasskanal 22 noch mit einem Auslasskanal 28 sondern mit der Abgasrückführleitung 42 verbunden sind (AGR-Ventile).

Bei der ersten Alternative gemäß Fig. 2 erfolgt eine externe Abgasrückführung während die Einlassventile 14 geöffnet sind und auch noch danach. Hierbei schließt zwar das Einlassventil 14 gemäß drittem Graph 66 regulär, jedoch bleibt das AGR-Ventil 18 gemäß viertem Graph 68 länger offen und schließt erst nach dem Schließen des Einlassventils 14 gemäß drittem Graph 66 sowie nach dem UT 60. Auf diese Weise ist ein Miller-Atkinson-Zyklus realisiert, da während des Verdichtungstaktes nach UT 60 das AGR-Ventil 18 gemäß viertem Graph 68 offen bleibt, so dass ein Teil der zuvor über das Einlassventil 14 eingeleiteten Zylinderladung in die Abgasrückführleitung 42 ausgeschoben wird, bevor die eigentliche Verdichtung nach dem Schließen auch des AGR-Ventils 18 gemäß viertem Graph 68 beginnt. Durch eine Verschiebung der Öffnung des AGR-Ventils 18 in Pfeilrichtung 76 ist der Miller-Atkinson-Zyklus mehr oder weniger stark ausgeprägt. Gleichzeitig steuert die Höhe des vierten Graphen 68 sowie die Öffnungsdauer die Menge der externen Abgasrückführung. In dem Beispiel gemäß Fig. 2 wird eine geringe Menge Abgas rückgeführt. Insgesamt wird somit mittels das AGR-Ventils 18 gleichzeitig der Milier-Atkinson-Zyklus und die AGR dargestellt, so dass für die Einlassventile 14 und Auslassventile 16 keine zusätzliche Ventilsteuerzeitverstellung (VVT) erforderlich ist. Die Ansteuerung der Einlassventile 14 und Auslassventile 16 kann mit starren Nocken und ohne Nockenwellenverstellung o.ä. erfolgen.

Bei der zweiten Alternative gemäß Fig. 3 erfolgt die externe Abgasrückführung während und nachdem die Einlassventile 14 geöffnet sind. Im Unterschied zur ersten Alternative gemäß Fig. 2 ist der vierte Graph 68 deutlich höher und die Öffnungszeit der AGR-Ventile 18 wesentlich länger, so dass eine große Menge Abgas zurückgeführt wird. Der Miller-Atkinson-Zyklus wird wie bei ersten Alternative gemäß Fig. 2 durch spätes Schließen der AGR-Ventile 18 gleichzeitig mit der AGR realisiert. Die Einlassventile 14 schließen regulär, d.h. nicht für einen Miller-Atkinson-Zyklus. Sowohl bei der Ausführungsform gemäß Fig. 2 als auch derjenigen gemäß Fig. 3 erfolgt trotz der Realisierung eines Miller-Atkinson-Zyklus kein Ausschieben eines Teils der Zylinderladung in den Einlasskanal 22, sondern in die AGR-Leitung 42.

Bei der dritten Alternative gemäß Fig. 4 werden die AGR-Ventile 18 innerhalb eines Arbeitsspieles von 720 Grad Kurbelwelle, wobei jedes Arbeitsspiel für jeden Arbeitszylinder jeweils einen Ansaugtakt, einen Verdichtungstakt, einen Arbeitstakt und einen Ausstoßtakt umfasst, jeweils zweimal geöffnet. Die erste Öffnung der AGR-Ventile 18 gemäß viertem Graph 68 erfolgt zwischen dem UT 56 und dem OT 58, während das Auslassventil 16 gemäß dem zweiten Graph 64 geöffnet ist. Hierdurch erfolgt eine innere AGR über das AGR-Ventil 18, da Abgas teilweise aus dem Arbeitszylinder nicht in den Auslasskanal 28 sondern in die AGR-Leitung 42 ausgeschoben und später wieder in den Arbeitszylinder eingesaugt wird. Die zweite Öffnung der AGR-Ventile 18 gemäß viertem Graph 68 erfolgt zwischen dem OT 58 und dem UT 60 während das Einlassventil 14 gemäß drittem Graph 66 geöffnet ist. Hier wird einerseits das zuvor in die AGR-Leitung 42 ausgeschobene Abgas des vorhergehenden Arbeitsspieles wieder in den Arbeitszylinder eingesaugt und gleichzeitig extern Abgas zurückgeführt. Durch eine höhere Ausbildung des vierten Graphen 68 für die zweite Öffnung im Vergleich zur ersten Öffnung des AGR-Ventils 18 wird das zuvor ausgeschobene Abgas vollständig in den Arbeitszylinder gefördert und zusätzlich extern Abgas zugeführt. Dies ist mit Pfeil 78 für die erste Öffnung des AGR-Ventils 18 und mit Pfeil 80 für die zweite Öffnung des AGR-Ventils 18 angedeutet.

Bei der dargestellten Brennkraftmaschine ist es vorgesehen, bei einer Motorkonfiguration mit mehr als zwei Ventilen pro Arbeitszylinder 12 ein Gaswechselventil 18 alleine für die Zumessung von Abgasrückführung/Restgas einzusetzen. Die Beschickung dieses AGR-Ventils 18 mit separatem Einlasskanal erfolgt beispielsweise über folgende Varianten:
- reines Abgas aus gekühltem Niederdruck-AGR Kreislauf (evtl. mit eigener Verdichterstufe);
- reines Abgas aus gekühltem Hochdruck-AGR Kreislauf;
- reines Abgas aus ungekühltem Hochdruck-AGR Kreislauf;
- Luft-Abgas Gemisch aus den vorher genannten Varianten.

Bei allen Varianten werden die eigentlichen Einlassventile nur noch mit Frischluft oder einer Grundmenge AGR versorgt.

Die Steuerung des Gaswechselventils 18 und eventuell auch der weiteren Gaswechselventile 14, 16 wird mittels eines variablen Ventiltriebs (mechanisch, elektrisch oder hydraulisch) realisiert und kann hinsichtlich des Zeitpunktes sowohl parallel zum Einlass als auch zeitlich versetzt erfolgen. Die Zumessung von rückgeführtem Abgas wird somit an jeden einzelnen Arbeitszylinder 12 über Positionierung, Hubhöhe und Steuerbreite der Ansteuerung der Gaswechselventile 18 bzw. 14, 16 eingestellt.

Vorteilhaft an dieser Anordnung ist neben der zyklusgenauen Dosierbarkeit der AGR vor allem die Ausnutzung der gesamten Abgasenergie auf der Turbinenseite, während gegenüber einer klassischen Niederdruckanordung nur der Frischluftmassenstrom verdichtet werden muss. Der AGR-Massenstrom wird über das AGR-Ventil 18 direkt durch den Motor angesaugt. Die optionalen Kühler 44, 46 und Bypässe 50 dienen dabei einem luft- und abgasseitigen Temperaturmanagement. Ein optionales zusätzliches Umschaltventil 70 in einer Verbindungsleitung 72 zwischen der Abgasleitung 26 stromauf der Turbine 38 und der Abgasrückführleitung 42 ermöglicht die Verwendung von Hochdruck-(HD)-AGR und/oder Niederruck(ND)-AGR. Wahlweise ist in der Verbindungsleitung 72 zusätzliche ein Kühler 74 angeordnet.

Das vollvariable AGR-Ventil 18 wird durch geschickte Anordnung der Steuerzeiten zur Darstellung eines Miller-Atkinson-Zyklus mit spätem Einlassschluss des AGR-Ventils 18 verwendet. Durch Mehrfachbetätigung des AGR-Ventils 18 innerhalb eines Arbeitsspiels wird eine Kombination aus interner und externer AGR über ein einziges Ventil erzielt. Die Steuerzeiten aller weiteren Ein- und Auslassventile 14, 16 können hierbei fixiert bleiben und durch einen einfachen nockengetriebenen Steuertrieb betätigt werden. Im Gegensatz zum bekannten Miller-Atkinson-Zyklus wird die Zylinderladung nicht in den Ansaugtrakt sondern in den AGR-Trakt bzw. die AGR-Leitung 42 zurück geschoben. Gleiches gilt für die innere AGR mittels der zweifachen Öffnung des AGR-Ventils 18, wie in Fig. 4 dargestellt.

## Patentansprüche

1. Verfahren zum Betreiben einer Brennkraftmaschine (10) mit mindestens einem Arbeitszylinder (12), in dem ein Kolben auf und ab bewegt wird, so dass innerhalb eines Arbeitsspiels von 720 Grad Kurbelwelle nacheinander ein Ansaugtakt, ein Verdichtungstakt, ein Arbeitstakt und ein Ausstoßtakt ausgeführt wird, und dem mindestens drei Gaswechselventile (14, 16, 18) zugeordnet sind, mit einer Abgasleitung (26), mit mindestens einem Einlasskanal (22), der in ein Gaswechselventil in Form eines Einlassventils (14) mündet und über dieses Einlassventil (14) dem Arbeitszylinder (12) mindestens Verbrennungsluft zuführt, mit mindestens einem Auslasskanal (28), der in ein Gaswechselventil in Form eines Auslassventils (16) mündet und über dieses Auslassventil (16) von dem Arbeitszylinder (12) mindestens Abgas in die Abgasleitung abführt, sowie mit mindestens einer Abgasrückführleitung (42), die mit der Abgasleitung (26) der Brennkraftmaschine (10) verbunden ist, wobei mindestens eines der Gaswechselventile von mindestens einem der Arbeitszylinder als AGR-Ventil (18) verwendet und diesem Abgas aus einer Abgasrückführleitung zugeführt wird, **dadurch gekennzeichnet, dass** in einem vorbestimmten Betriebszustand der Brennkraftmaschine innerhalb eines Arbeitsspiels von 720 Grad Kurbelwelle das AGR-Ventil (18) mindestens zweimal geöffnet wird, wobei eine Öffnungsdauer der ersten Öffnung des AGR-Ventils (18) zeitlich mit einer Öffnung des Auslassventils (16) während des Ausstoßtaktes mindestens überlappt und eine Öffnungsdauer der zweiten Öffnung des AGR-Ventils (18) zeitlich mit einer Öffnungsdauer des Einlassventils (14) während des Ansaugtaktes mindestens überlappt, wobei das AGR-Ventil (18) zwischen der ersten und der zweiten Öffnung geschlossen wird.

2. Verfahren nach Anspruch 1, **dadurch gekennzeichnet, dass** in einem vorbestimmten Betriebszustand der Brennkraftmaschine innerhalb eines Arbeitsspiels von 720 Grad Kurbelwelle das AGR-Ventil (18) zeitlich nach einem unteren Totpunkt zwischen einem Ansaugtakt und einem Verdichtungstakt derart spät nach Beginn des Verdichtungstaktes und zeitlich nach einem Schließen des Einlassventils (14) geschlossen wird, dass ein Teil der Zylinderladung in die Abgasrückführleitung (42) ausgeschoben wird, bevor ein Verdichtungstakt beginnt, so dass die Brennkraftmaschine mit einem Miller-Atkinson-Zyklus betrieben wird.

3. Verfahren nach mindestens einem der vorhergehenden Ansprüche, **dadurch gekennzeichnet, dass** die Öffnungsdauer der ersten Öffnung des AGR-Ventils (18) derart gewählt wird, dass ein Öffnungszeitpunkt des AGR-Ventils (18) für die erste Öffnung zeitlich bei oder nach einem Öffnungszeitpunkt des Auslassventils (16) für den Ausstoßtakt und ein Schließzeitpunkt des AGR-Ventils (18) für die erste Öffnung zeitlich bei oder vor einem Schließzeitpunkt des Auslassventils (16) für den Ausstoßtakt liegt.

4. Verfahren nach mindestens einem der vorhergehenden Ansprüche, **dadurch gekennzeichnet, dass** die Öffnungsdauer der zweiten Öffnung des AGR-Ventils (18) derart gewählt wird, dass ein Öffnungszeitpunkt des AGR-Ventils (18) für die zweite Öffnung zeitlich bei oder nach einem Öffnungszeitpunkt des Einlassventils (14) für den Ansaugtakt und ein Schließzeitpunkt des AGR-Ventils (18) für die zweite Öffnung zeitlich bei oder vor einem Schließzeitpunkt des Einlassventils (14) für den Ansaugtakt liegt.

5. Verfahren nach mindestens einem der vorhergehenden Ansprüche, **dadurch gekennzeichnet, dass** dem Einlassventil (14) ausschließlich Frischluft oder einer Grundmenge AGR zugeführt wird.

6. Verfahren nach mindestens einem der vorhergehenden Ansprüche, **dadurch gekennzeichnet, dass** dem AGR-Ventil (18) reines oder mit Frischluft gemischtes Abgas aus einem gekühlten oder ungekühlten Niederdruck-AGR-Kreislauf zugeführt wird.

7. Verfahren nach mindestens einem der vorhergehenden Ansprüche, **dadurch gekennzeichnet, dass** dem AGR-Ventil (18) reines oder mit Frischluft gemischtes Abgas aus einem gekühlten oder ungekühlten Hochdruck-AGR-Kreislauf zugeführt wird.

## Claims

1. Method for operating an internal combustion engine (10) having at least one working cylinder (12) in which a piston is moved up and down, such that, within a working cycle of 720 degrees crank angle, an intake stroke, a compression stroke, a working stroke and an exhaust stroke are performed in succession, said at least one working cylinder being assigned at least three gas exchange valves (14, 16, 18), having an exhaust line (26), having at least one inlet duct (22) which issues into a gas exchange valve in the form of an inlet valve (14) and which feeds at least combustion air to the working cylinder (12) via said inlet valve (14), having at least one outlet duct (28) which issues into a gas exchange valve in the form of an outlet valve (16) and which discharges at least exhaust gas from the working cylinder (12) into the exhaust line via said outlet valve (16), and having at least one exhaust-gas recirculation line (42) which is connected to the exhaust line (26) of the internal combustion engine (10), wherein at least one of the gas exchange valves of at least one of the working cylinders is used as an EGR valve (18) and is fed with exhaust gas from an exhaust-gas recirculation line, **characterized in that** in a predetermined operating state of the internal combustion engine, the EGR valve (18) is opened at least twice within a working cycle of 720 degrees crank angle, wherein an opening duration of the first opening of the EGR valve (18) temporally at least overlaps an opening of the outlet valve (16) during the exhaust stroke, and an opening duration of the second opening of the EGR valve (18) temporally at least overlaps an opening duration of the inlet valve (14) during the intake stroke, wherein the EGR valve (18) is closed between the first and second opening processes.

2. Method according to Claim 1, **characterized in that** in a predetermined operating state of the internal combustion engine, within a working cycle of 720 degrees crank angle, temporally after a bottom dead centre between an intake stroke and a compression stroke, the EGR valve (18) is closed late after the start of the compression stroke and temporally after a closure of the inlet valve (14) such that a part of the cylinder charge is discharged into the exhaust gas recirculation line (42) before a compression stroke begins, such that the internal combustion engine is operated on a Miller-Atkinson cycle.

3. Method according to at least one of the preceding claims, **characterized in that** the opening duration of the first opening of the EGR valve (18) is selected such that an opening time of the EGR valve (18) for the first opening temporally coincides with or follows an opening time of the outlet valve (16) for the exhaust stroke and a closing time of the EGR valve (18) for the first opening temporally coincides with or precedes a closing time of the outlet valve (16) for the exhaust stroke.

4. Method according to at least one of the preceding claims, **characterized in that** the opening duration of the second opening of the EGR valve (18) is selected such that an opening time of the EGR valve (18) for the second opening temporally coincides with or follows an opening time of the inlet valve (14) for the intake stroke, and a closing time of the EGR valve (18) for the second opening temporally coincides with or precedes a closing time of the inlet valve (14) for the intake stroke.

5. Method according to at least one of the preceding claims, **characterized in that** the inlet valve (14) is fed exclusively with fresh air or with a base EGR flow rate.

6. Method according to at least one of the preceding claims, **characterized in that** the EGR valve (18) is fed with pure exhaust gas, or exhaust gas mixed with fresh air, from a cooled or non-cooled low-pressure EGR circuit.

7. Method according to at least one of the preceding claims, **characterized in that** the EGR valve (18) is fed with pure exhaust gas, or exhaust gas mixed with fresh air, from a cooled or non-cooled highpressure EGR circuit.

## Revendications

1. Procédé permettant de faire fonctionner un moteur à combustion interne (10) comprenant au moins un cylindre de travail (12) dans lequel un piston est déplacé de haut en bas, de telle sorte qu'au cours d'un cycle de travail de 720 degrés vilebrequin soient effectués l'un après l'autre un temps d'admission; un temps de compression, un temps de travail et un temps d'échappement, et auquel sont associées au moins trois soupapes d'échange de gaz (14, 16, 18), comprenant une conduite d'échappement (26), comprenant au moins un canal d'admission (22) qui débouche dans une soupape d'échange de gaz sous la forme d'une soupape d'admission (14) et achemine, par l'intermédiaire de cette soupape d'admission (14), au moins de l'air de combustion au cylindre de travail (12), comprenant au moins un canal d'évacuation (28) qui débouche dans une soupape d'échange de gaz sous la forme d'une soupape d'évacuation (16) et, par l'intermédiaire de cette soupape d'évacuation (16), évacue dans la conduite d'échappement au moins des gaz d'échappement à partir du cylindre de travail (12), et comprenant au moins une conduite de recirculation des gaz d'échappement (42) qui est reliée à la conduite d'échappement (26) du moteur à combustion interne (10), au moins l'une des soupapes d'échange de gaz étant utilisée en tant que soupape RGE (18) par au moins l'un des cylindres de travail et les gaz d'échappement étant acheminés jusqu'à celle-ci à partir d'une conduite de recirculation des gaz d'échappement, **caractérisé en ce que**, dans un état de fonctionnement prédéfini du moteur à combustion interne, la soupape RGE (18) est ouverte au moins deux fois au cours d'un cycle de travail de 720 degrés vilebrequin, une durée d'ouverture de la première ouverture de la soupape RGE (18) chevauchant au moins, dans le temps, une ouverture de la soupape d'évacuation (16) pendant le temps d'échappement et une durée d'ouverture de la deuxième ouverture de la soupape RGE (18) chevauchant au moins, dans le temps, une durée d'ouverture de la soupape d'admission (14) pendant le temps d'admission, la soupape RGE (18) étant fermée entre la première et la deuxième ouverture.

2. Procédé selon la revendication 1, **caractérisé en ce que**, dans un état de fonctionnement prédéfini du moteur à combustion interne, au cours d'un cycle de travail de 720 degrés vilebrequin, la soupape RGE (18) est fermée, dans le temps, après un point mort bas entre un temps d'admission et un temps de compression tard après le début du temps de compression et, dans le temps, après une fermeture de la soupape d'admission (14), de telle sorte qu'une partie de la charge de cylindre soit évacuée dans la conduite de recirculation des gaz d'échappement (42) avant qu'un temps de compression ne commence, de sorte que le moteur à combustion interne fonctionne avec un cycle Miller-Atkinson.

3. Procédé selon au moins l'une quelconque des revendications précédentes, **caractérisé en ce que** la durée d'ouverture de la première ouverture de la soupape RGE (18) est sélectionnée de telle sorte qu'un instant d'ouverture de la soupape RGE (18) pour la première ouverture se situe, dans le temps, à ou après un instant d'ouverture de la soupape d'évacuation (16) pour le temps d'échappement et qu'un instant de fermeture de la soupape RGE (18) pour la première ouverture se situe, dans le temps, à ou avant un instant de fermeture de la soupape d'évacuation (16) pour le temps d'échappement.

4. Procédé selon au moins l'une quelconque des revendications précédentes, **caractérisé en ce que** la durée d'ouverture de la deuxième ouverture de la soupape RGE (18) est sélectionnée de telle sorte qu'un instant d'ouverture de la soupape RGE (18) pour la deuxième ouverture se situe, dans le temps, à ou après un instant d'ouverture de la soupape d'admission (14) pour le temps d'admission et qu'un instant de fermeture de la soupape RGE (18) pour la deuxième ouverture se situe, dans le temps, à ou avant un instant de fermeture de la soupape d'admission (14) pour le temps d'admission.

5. Procédé selon au moins l'une quelconque des revendications précédentes, **caractérisé en ce qu'**exclusivement de l'air frais ou un débit de base RGE est acheminé jusqu'à la soupape d'admission (14).

6. Procédé selon au moins l'une quelconque des revendications précédentes, **caractérisé en ce que** des gaz d'échappement, propres ou mélangés avec de l'air frais, provenant d'un circuit RGE basse pression refroidi ou non refroidi sont acheminés jusqu'à la soupape RGE (18).

7. Procédé selon au moins l'une quelconque des revendications précédentes, **caractérisé en ce que** des gaz d'échappement, propres ou mélangés avec de l'air frais, provenant d'un circuit RGE haute pression refroidi ou non refroidi sont acheminés jusqu'à la soupape RGE (18).
